# EUROPEAN PATENT APPLICATION

(11) **EP 0 683 988 A1**
(43) Date of publication of application: **29.11.1995**
(21) Application number: 95200913.2
(22) Date of filing: 11.04.1995
(51) Int. Cl.: A23N 7/02, A23N 12/02, A22C 29/04

(54) **Machine for peeling fruit, tubers and vegetables and cleaning mussels**

(30) Priority: 27.05.1994 IT MI940384 U
(71) Applicant: ALCOR S.r.l., I-40069 Zola Predosa, (Bologna) (IT)
(72) Inventor: Manfroni, Ezio Augusto, I-40044 Pontecchio Marconi, Bologna (IT); Ferretti, Fabio Andrea, I-40100 Bologna (IT)
(74) Representative: Faraggiana, Vittorio, Dr. Ing.

(57) **Abstract**

A machine (10) for peeling products such as fruit, tubers and vegetables and for cleaning mussels consists of a container with cylindrical chamber (11) near whose lower base rotates coaxially therewith a motorised processing disc (14). The container (11) exhibits a side passage (16) for unloading of the peeled product. An element with cylindrical wall (17) coaxial with the cylindrical chamber (11) is movable between a first or operating position of closing of the passage (16) and a second position of opening or unloading of the passage.

## Description

The present invention relates to a machine to be used for removing the peel from fruit and vegetables such as potatoes, onions, etc.

In the prior art, machines for peeling of such products consist e.g. of a static vertical cylindrical container in which are inserted the products to be treated, normally through a cover in its upper part. In the lower part of the cylinder is a rotating horizontal disc bearing blades or abrasive material. On the side wall of the cylinder is normally provided a door which can be opened for removal of the peeled product.

In particular unloading of the peeled product from machines of the prior art can take place by means of opening of the door with the disc moving so that the centrifugal force facilitates exit of the product.

Such machines display however the shortcoming that they permit access to the blade support disc even when it is rotating with resulting risk of accidents.

The vertical position of the rotating axis furthermore does not allow adequate mixing of the product already peeled with that still to be treated and therefore one part of it exits with residues of peelings still present while one part undergoes removal of even large quantities of edible product.

The break in the wall caused by the presence of the door also causes damage to the product treated with removal even of substantial parts thereof.

The general purpose of the present invention is to overcome the above mentioned shortcomings by supplying a fruit and vegetable peeling machine which would ensure maximum operational safety while allowing ease of unloading of the product with the machine stopped.

Another purpose of the invention is to ensure good changing of the product in contact with the blades to secure the highest uniformity of processing and minimum removal of edible product.

In view of said purposes it was sought to provide in accordance with the present invention a machine for peeling or cleaning of products consisting of a container with cylindrical chamber near whose base rotates coaxially therewith a motorised processing disc with the container exhibiting on the side a passage for unloading the peeled product and characterised in that it comprises an element with cylindrical wall coaxial with the cylindrical chamber and movable between a first or operating position of closing the passage and a second or unloading position of opening the passage.

To clarify the explanation of the innovative principles of the present invention and its advantages compared with the prior art there is described below with the aid of the only annexed drawing a possible embodiment thereof by way of non-limiting example applying said principles.

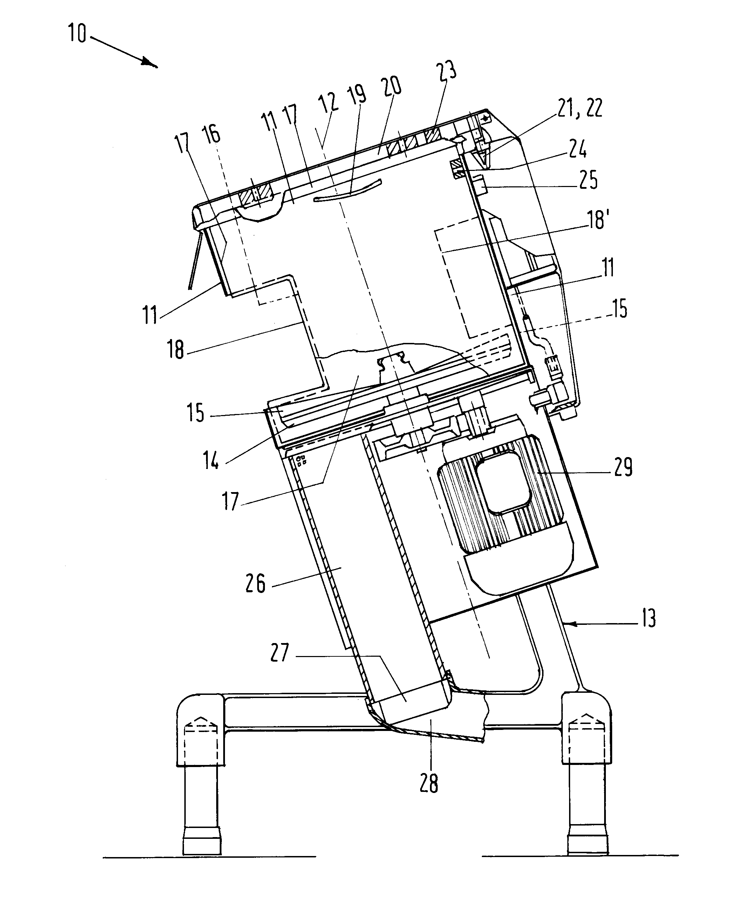

With reference to the figure there is shown a diagrammatic side view of the machine in accordance with the present invention.

The machine, indicated as a whole by reference number 10, for pealing fruit and vegetables, e.g. potatoes, onions, etc., consists of a first static container 11 with cylindrical chamber.

The container 11 is supported by a supporting structure 13.

Near the bottom of the container 11 there is a disc 14 with work top bearing blades 15 (or other abrasive material) slightly projecting inwards of the container 11 and moved by known motor means 29 to rotate around the axis 12.

On the side surface of the cylindrical container 11 is provided an opening or passage 16 near the blade disc 14.

Inside the container 11 is inserted telescopically a cylindrical-walled element 17 open at the ends and in turn having in the lower portion of its side surface an opening 18 essentially of the same dimensions as the passage 16.

The cylindrical internal element 17 is advantageously equipped at its upper end with handles indicated schematically by 19 for its insertion in the container 11 unto essential coincidence between the two side openings 16, 18. The cylinder 17 can be rotated between a position of coincidence between the openings 16, 18 and a position of closing of said openings. In the figure the position of the opening 18 in the closing position is shown in broken lines at 18', advantageously 180 in relation to the open position shown in solid lines.

The machine 10 is equipped at the top with a cover 20 advantageously provided in transparent material for closing of the top loading opening for the product and insertion of the cylinder 17.

The machine is also equipped in a suitable position with a first and a second switches 21, 22, e.g. of the magnetically operated type and connected together in series along an electrical circuit (not shown) for power supply of the rotation of the disc 14.

The first switch 21 is operated by a first signaller or magnetic plate 23 located e.g. in the internal part of the cover 20 and enables the circuit of the machine only if the cover is in a position of closing the container.

The second switch 22 is operated by a corresponding magnetic plate 24 located on the internal cylinder and closes the circuit only when the internal cylinder is inserted in the closing or non- coinciding position of the openings 16, 18.

The two sensors or switches 21, 22 ensure therefore the greatest safety concerning accessibility to the internal parts of the machine and in particular to the blade disc 14. Indeed, the circuit can be closed to make the disc rotate only when the top cover 20 is closed and the internal cylinder is inserted and rotated in such a manner that the side openings 16, 18 are obstructed.

The machine 10 is advantageously equipped with a known water spray device 25 for washing the treated product with entrainment of the peel fragments removed in an area 26 underlying the rotating disc 14. Here the larger fragments can be held back by a filter 27 while the smaller fragments can flow out through a drain 28.

Advantageously the container 11 has its axis 12 inclined to the vertical by an angle between 10 and 45 and preferably around 200. In this case the drain opening 16 is preferably on the side of the container turned downward so as to permit exit by gravity of the cylinder contents.

Operation of the machine can be described briefly thus: in the machine with the internal cylinder 17 inserted in the container 11 and rotated in relation thereto in the correct position of closing of the side openings (with resulting operation of the switch 22) the product to be peeled is introduced through the top opening.

Next the cover 20 is closed so as to operate the switch 21. At this point the blade disc 14 can be made to rotate in complete safety since it is impossible to accede to the interior of the container.

The inclination of the axis 12 in relation to the vertical causes during rotation better mixing of the product being processed and thus promotes uniformity of peeling.

Once the peeling operation is completed as seen through the transparent cover 20 the disc 14 is stopped and the internal cylinder 17 can be rotated to the position of coincidence of the side openings 16, 18 for unloading of the peeled product. The inclination of the container together with the lower position of said openings facilitates the unloading operating by gravity.

It is pointed out that accidental or voluntary opening of the cover 20 or a rotation of the internal cylinder 17 break the electrical circuit and cause automatic stopping of the blade disc 14 thus ensuring maximum safety in operation.

In addition, the use of an internal cylinder for closing the unloading opening provides essential continuity of the internal wall of the processing chamber so as to avoid harm to the processed product. Cleaning is also facilitated.

The thinness of the internal cylinder 17 provides that the edge of the internal opening 18 does not produce harm to the processed product.

In the case of an inclined container, the position of closing the opening 18 in the position towards the upper side of the container is advantageous because this position is only affected marginally by the mixing movement of the treated products while the lower zone, which is that of greatest mixing, is unbroken and without sharp edges.

It is now clear that the preset purposes have been achieved.

Naturally the above description of an embodiment applying the innovative principles of the present invention is given merely by way of example and therefore is not to be taken as a limitation of the patent right claimed here.

For example, the cover 20 can be provided capable of being fastened to the external container 11 as also to the internal cylinder 17.

In addition, the form and position of the openings can be different from those shown. For example, the movement of the cylinder for unloading could he not rotary but traversing along the axis.

The sensors for detection of the correct position of the cover and cylinder could naturally be provided by elements different from a pair of switches. For example, as will be clear to those skilled in the art, a mechanical sensor for positioning the cover and cylinder and acting on only one switch could be used.

## Claims

1. Machine (10) for peeling or cleaning of products and consisting of a container with cylindrical chamber (11) near whose lower base rotates coaxially therewith a motorised processing disc (14) with the container (11) presenting laterally a passage (16) for unloading the peeled product and characterised in that it comprises an element with cylindrical wall (17) coaxial with the cylindrical chamber (11) and moving between a first or operating position of closing the passage (16) and a second or unloading position of opening the passage.

2. Machine in accordance with claim 1 and characterised in that the element with cylindrical wall (17) is inserted axially in the cylindrical chamber (11).

3. Machine in accordance with claim 1 and characterised in that the element with cylindrical wall (17) is movable between a first and a second position by means of rotation around its own axis and comprises a side opening (18) of its own essentially coinciding with the passage (16) when in the second position.

4. Machine in accordance with claim 3 and characterised in that the element with cylindrical wall (17) has an opening (18) in a position diametrically opposite the passage (16) in the chamber (11) when in the first position.

5. Machine in accordance with claim 1 and characterised in that there are provided at least two sensors (21,22) for enablement of rotation of the disc (14) and operated by a first signaller (23) of the closed position of the top cover (20) of the machine and by a second signaller (24) of the correct position of insertion of the element with cylindrical wall (17) in the first position.

6. Machine in accordance with claim 5 and characterised in that the sensors (21,22) are magnetically operated switches.

7. Machine in accordance with claim 1 and characterised in that the container with cylindrical chamber (11) has its axis (12) inclined to the vertical by an angle between 10 and 45° and preferably around 20 °.

8. Machine in accordance with claim 7 and characterised in that the passage (16) is on the side of the container (11) turned downward in order to promote unloading by gravity of the machine contents.
